# EUROPEAN PATENT APPLICATION

(11) **EP 2 503 291 A1**
(43) Date of publication of application: **26.09.2012**
(21) Application number: 11002352.0
(22) Date of filing: 22.03.2011
(51) Int. Cl.: G01C 21/36, G06F 17/30, G01C 21/32

(54) **Signposts in digital maps**

(71) Applicant: Harman Becker Automotive Systems GmbH, 76307 Karlsbad (DE)
(72) Inventor: Spindler, CC, 76135 Karlsruhe (DE); Ivanov, Vladimir, 81375 München (DE); Fischer, Martin, 80805 München (DE); Schütz, Simon, 70195 Stittgart (DE)
(74) Representative: Grünecker, Kinkeldey, Stockmair & Schwanhäusser

(57) **Abstract**

The present invention relates to a method for the management of signposts in a navigation database, comprising storing a text and/or a symbol of a signpost in the navigation database and storing independently from the text and/or the symbol a background of the signpost in the navigation database.

## Description

### Field of Invention

The present invention relates to digital maps representing towns and landscapes that can be used for route guidance by a navigation system and, in particular, it relates to the management and display of signposts.

### Prior Art

The use of navigation systems, in particular, in vehicles as automobiles becomes increasingly prevalent. Usually on board navigation computer systems analyze the combined data provided by GPS (Global Positioning System), motion sensors as ABS wheel sensors as well as a digital map and thereby determine the actual position and velocity of a vehicle with increasing preciseness.

Known navigation systems typically make use electronic digital maps to represent cartographic features, as streets, buildings and rivers, and make use of a medium such as a compact disk or a digital video disc to store the data that relates to the cartographic features. After map matching the actual position of the user is indicated in the digital map. By acoustic and/or visualized information the user is guided to the predetermined destination.

Some navigation systems are able to display detailed digital maps indicating routes to destinations, the types of manoeuvres to be taken at various locations as junctions as well as different kinds of points of interest as, for example, gas stations or restaurants and also landmarks. As the vehicle changes position, either the vehicle position mark on the displayed image changes, or the digital map is scrolled, while the vehicle position mark is fixed at a predetermined position.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective. However, a 2-dimensional representation can confuse the driver, in particular, if roads are intersecting a different height levels or in rotary turns with roads in close proximity. Herein, the terms 'road' and 'street' are used in an interchangeable manner.

Recently, various navigation systems have been developed that have provided algorithms for transforming data from a geographic database into a 3-dimensional perspective view which, in principle, is much more easily understood by many drivers. Elaborated systems allow for displaying the intersection approached by the vehicle at variable angles relative to the road depending on the complexity of the intersection. Herein, the terms 'intersection' and 'junction' are used in an interchangeable way.

In order to provide the navigation functions the navigation systems make use of one or more detailed databases that comprise data which represent physical features of a geographic region. The employed navigation database may comprise a main image file comprising bitmap images consisting, e.g., of bitmap of the road geometry signposts, landmarks, the skyline etc. The database may comprise a main image file comprising bitmap images and/or vector graphics consisting, e.g., of bitmap of the road geometry, signposts, landmarks, the skyline etc.

Of particular importance in digital maps used for navigation purposes are signposts, i.e. posts giving information for guidance. Signposts comprise relatively big signs displaying *inter alia* the direction to a city, signpost icons in form of a graphic representation of facilities as an industrial area, a soccer stadium, an airport, etc., road number icons indicating the number of a road, a highway, etc., an exit number icon indicating the road number of a road branching at an intersection (junction). In the physical environment they can be found at junctions, in particular, junctions on highways.

Since signposts provide much information to a user of a digital map they are vey expensive in terms of computational resources. The storage, management and display of signposts in the context of digital maps and electronically aided navigation is a demanding task, in particular, with respect to the implementation in embedded systems with limited computational resources as vehicle navigation systems. The correct display of signpost in real time navigation is, however, important for a user of a navigation system in order be able to decide on turns to be taken, directions to be changes, etc. in a timely manner. Thus, there is a need for an improved management of signposts in digital maps used for route guidance.

### Description of the Invention

The present invention addresses the above-mentioned need and provides a method for the management of signposts in a navigation database, comprising
storing (data of) a text and/or a symbol of a signpost in the navigation database; and
storing independently from the (data of) text and/or the symbol (data of) a background of the signpost in the navigation database

Thus, according to the invention and different from the art a background of a signpost is stored independently from the informational content of the same. Thereby, the memory demand for a particular signpost at a particular memory location can be reduced. Signposts are signs that in the physical environment, for example, are positioned at highway intersections (in particular, intersections of German *Bundesstraßen* and *Autobahnen)* and indicate the direction to a city, facilities as an industrial area, a soccer stadium, an airport, etc., the number of a road, a highway, etc., and/or the road number of a road branching at an intersection (junction).

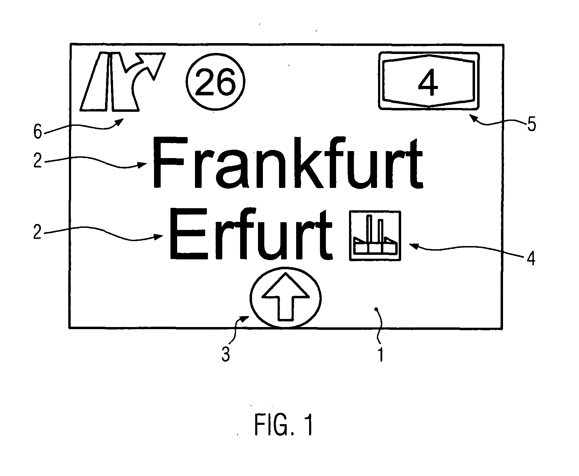

Figure 1 illustrates a signpost for a digital map that can be generated and displayed in accordance with the present invention. The signpost comprises text and symbols (icons) and a background 1 of the signpost. In particular, according to the shown example a signpost comprises a signpost text 2 indicating the names of cities that can be reached on the highway at which the signpost is positioned. The signpost also comprises an arrow sign 3 indicating the direction to the cities named by the signpost text 2. The signpost, furthermore, comprises a signpost icon 4 indicating an industrial area, a road number icon 5 and an exit number icon 6. The road number icon 5 indicates the number of a road, in the shown example, of a German *Autobahn.* The exit number icon 6 indicates the number of an exit from a road, in the shown example, of a German *Autobahn.* All of the elements may be stored separately in a navigation database. In particular, according to the invention the background 1, i.e. the background, without any texts or icons is stored in the required size, for example, the png format.

When a signpost is to be displayed in a digital map the text and icon elements as well as the background of the signpost 1 are retrieved from the database storing them and then the signpost is displayed in the digital map based on the retrieved text and/or symbol and the retrieved background of the signpost, i.e. the signpost is generated from the stored data by compiling the retrieved background and text and/or symbols and displaying them in form of a signpost.

The method may further comprise storing a reference between the text and/or the symbol and the background of the signpost in the navigation database. The reference represents a (data) link between a text or symbol element of the signpost and the background of the signpost. This reference allows for composing the signpost for displaying the same without the need for determining the appropriate background of the signpost for a particular signpost by online calculation. According to this example the suitable background of the signpost is linked to the text and/or symbol elements beforehand thereby avoiding the risk of a false assignment during online calculation.

The method may further comprise storing a reference (reference data) linking
a) the background and/or the text and/or the symbol and
b) a position, in particular, coordinate values, in a digital map.

By the reference the position of the signpost is defined. When the signpost is to be displayed in the digital map it is located based on the retrieved reference (data).

The above-described examples may further comprise
retrieving the text and/or the symbol from the navigation database;
retrieving the background of the signpost from the navigation database; and
displaying the signpost in a digital map based on the retrieved text and/or symbol and the retrieved background of the signpost.

Other data of the digital map (streets, roads, topology, buildings, etc.) are also stored in the navigation database and retrieved from the same for display.

According to an embodiment the background of the signpost is a graphical object showing a transparent, semi-transparent or non-transparent plane or a transparent, semi-transparent or non-transparent three-dimensional body. The plane or the body may be colored or non-colored. Thus, a great variety of signposts with suitable backgrounds can be compiled.

It is furthermore provided a method for route guidance implemented in a navigation system, in particular, a vehicle navigation system, with a display device comprising the steps of
retrieving the text and/or the symbol from the navigation database;
retrieving the background of the signpost from the navigation database;
displaying the signpost in a digital map based on the retrieved text and/or symbol and the retrieved background of the signpost; and
providing guidance information to a user of the navigation system.

In the above-described examples, the digital map wherein the signpost is displayed can be a three-dimensional map. The signpost itself can be a two-dimensional or three-dimensional signpost. The signpost can, in particular, be displayed at a junction, particularly, a three-dimensional junction view.

Furthermore, it is provided a computer program product, comprising one or more computer readable media having computer-executable instructions for performing the steps of the method according to one of the above-described examples.

The above-mentioned need is also addressed by a navigation database comprising
digital map data;
data of a text and/or a symbol of a signpost in the navigation database; and
data of a background of the signpost in the navigation database and stored independently from the data of the text and/or the symbol; and
data referencing between a) the data of the text and/or the symbol of the signpost and b) the background of the signpost.

Then, it is provided herein a navigation system, in particular, a vehicle navigation system, comprising
the above-mentioned navigation database; and
a display means configured to display a digital map based on data of the navigation database such that the map includes a signpost with text and/or a symbol and a background of the signpost.

According to an embodiment in the navigation system the digital map is a three-dimensional map and/or the signpost is a two-dimensional or three-dimensional signpost.

## Claims

1. Method for the management of signposts in a navigation database, comprising
storing a text and/or a symbol of a signpost in the navigation database; and
storing independently from the text and/or the symbol a background of the signpost in the navigation database.

2. The method according to claim 1, wherein the text comprises the name of a city and/or the symbol comprises one of a road number icon, a signpost icon and an exit number icon.

3. The method according to claim 1 or 2, wherein the background of the signpost is a graphical object showing a transparent, semi-transparent or non-transparent colored or non-colored plane or three-dimensional body.

4. The method according to one of the preceding claims, further comprising storing a reference between the text and/or the symbol and the background of the signpost in the navigation database.

5. The method according to one of the preceding claims, further comprising storing a reference linking
a) the background and/or the text and/or the symbol and
b) a position, in particular, coordinate values, in a digital map.

6. The method according to one of the preceding claims, further comprising
retrieving the text and/or the symbol from the navigation database;
retrieving the background of the signpost from the navigation database; and
displaying the signpost in a digital map based on the retrieved text and/or symbol and the retrieved background of the signpost.

7. A method for route guidance implemented in a navigation system, in particular, a vehicle navigation system, with a display device comprising the steps of the method according to claim 6 and providing guidance information to a user of the navigation system.

8. The method according to claim 5, 6 or 7, wherein the digital map is a three-dimensional map and/or the signpost is a two-dimensional or three-dimensional signpost.

9. Computer program product, comprising one or more computer readable media having computer-executable instructions for performing the steps of the method according to one of the preceding claims.

10. A navigation database comprising
digital map data;
data of a text and/or a symbol of a signpost in the navigation database; and
data of a background of the signpost in the navigation database and stored independently from the data of the text and/or the symbol; and
data referencing between a) the data of the text and/or the symbol of the signpost and b) the background of the signpost.

11. A navigation system, in particular, a vehicle navigation system, comprising
the navigation database according to claim 10; and
a display means configured to display a digital map based on data of the navigation database such that the map includes a signpost with text and/or a symbol and a background of the signpost.

12. The navigation system according to claim 11, wherein the digital map is a three-dimensional map and/or the signpost is a two-dimensional or three-dimensional signpost.
